# EUROPÄISCHE PATENTANMELDUNG

(11) **EP 2 672 622 A1**
(43) Veröffentlichungstag der Anmeldung: **11.12.2013**
(21) Anmeldenummer: 12004351.8
(22) Anmeldetag: 08.06.2012
(51) Int. Cl.: H02P 3/22, H02P 29/00, B60L 7/14

(54) **Frequenzumrichter mit Bremswiderstand und Verfahren zur Funktionsüberwachung eines Bremswiderstandes in einem Frequenzumrichterbetrieb**

(71) Anmelder: OSMA-AUFZÜGE Albert Schenk GmbH & Co. KG, 49084 Osnabrück (DE)
(72) Erfinder: Weber, Robert, 49219 Glandorf (DE)
(74) Vertreter: Weeg, Thomas

(57) **Zusammenfassung**

Die vorliegende Erfindung bezieht sich auf einen Frequenzumrichter (2) mit einem einen Zwischenkreis (14) speisenden Gleichrichter, einem aus dem Zwischenkreis (14) gespeisten Wechselrichter mit leistungselektronischen Schaltern (T1 - T6), einem vom Frequenzumrichter (2) betriebenen Drehstrommotor (4), und einem Bremstransistor (T7) mit einem damit verbundenen Bremswiderstand (8) sowie auf ein entsprechendes Verfahren.

Um eine Absicherung für den Bremstransistor und den Bremswiderstand zu schaffen, der nicht aufwendig anlagenspezifisch angepasst werden muss, um funktionsfähig zu sein, sondern auf eine einfache und kostengünstige Art in einen beliebigen Frequenzumrichter integriert werden kann, wird vorgeschlagen, dass der Frequenzumrichter (2) zusätzlich aufweist: eine Messeinrichtung (10), die misst, ob am Bremswiderstand (8) eine elektrische Spannung anliegt, eine mit der Messeinrichtung (10) verbundene Auswerteeinrichtung (12) zum Vergleich der von der Messeinrichtung (10) ermittelten Messwerte mit gespeicherten Vergleichswerten, eine mit der Auswerteeinrichtung (12) verbundene Schaltvorrichtung (6), mit der die Zwischenkreisspannung auf den Bremswiderstand (8) abschaltbar ist, wobei die Auswerteeinrichtung (12) die Abschaltung der Zwischenkreisspannung vom Bremswiderstand (8) auslöst, wenn die von der Messeinrichtung (10) ermittelte Messwerte eine Einschaltdauer des Bremswiderstands (8) anzeigen, die den in der Auswerteeinrichtung (12) vorgegebenen Grenzwert der Einschaltdauer überschreitet.

## Beschreibung

Die vorliegende Erfindung bezieht sich auf einen Frequenzumrichter mit
- einem einen Zwischenkreis speisenden Gleichrichter,
- einem aus dem Zwischenkreis gespeisten Wechselrichter mit leistungselektronischen Schaltern,
- einem vom Frequenzumrichter betriebenen Drehstrommotor, und
- einem Bremstransistor mit einem damit verbundenen Bremswiderstand.

Die vorliegende Erfindung bezieht sich auf eine Vorrichtung zur Funktionsüberwachung eines Bremswiderstands.

Die Erfindung ist auch gerichtet auf ein Verfahren zur Funktionsüberwachung eines Bremswiderstandes in einem Frequenzumrichterbetrieb mit
- einem einen Zwischenkreis speisenden Gleichrichter,
- einem aus dem Zwischenkreis gespeisten Wechselrichter mit leistungselektronischen Schaltern,
- einem vom Frequenzumrichter betriebenen Drehstrommotor, und
- einem Bremstransistor mit einem damit verbundenen Bremswiderstand.

Ein gattungsgemäßer Frequenzumrichter zur Versorgung des Drehstrommotors einer Aufzugsanlage mit Strom ist aus der Schrift DE 37 08 261 C2 bekannt. Der Frequenzrichter ist ein Stromrichter, der aus einem Wechselstrom mit bestimmter Frequenz eine in Amplitude und Frequenz veränderbare Spannung generiert. Die leistungselektronischen Schalter können als gesteuerte Brücken ausgestaltet sein. Mit dieser umgerichteten Spannung wird der daran angeschlossene Drehstrommotor betrieben, um eine Aufzugskabine in einem Aufzugsschacht nach oben oder unten zu bewegen. Durch die Steuerung der Frequenz und/oder Spannung, beispielsweise über eine Pulsweitenmodulation, kann der Drehstrommotor mit unterschiedlichen Motorgeschwindigkeiten betrieben werden.

Ein Drehstrommotor kann entweder als Motor oder als Generator betrieben werden. Der Drehstrommotor kann ein Drehstromasynchron- oder -synchronmotor sein. Während der Motor im Motorbetrieb Strom verbraucht, ist er im Generatorbetrieb dazu in der Lage, Strom in den Zwischenkreis zurückzuspeisen. Dieser Effekt wird bei der Bremsensteuerung ausgenutzt. Steigt die Zwischenkreisspannung durch den generatorischen Betrieb des Drehstrommotors an, beispielsweise auf einen Wert von 650 V bis 780 V für einen bestimmten Frequenzumrichter, der bei einem anderen Frequenzumrichter auch höher oder tiefer sein kann, so wird der Bremswiderstand eingeschaltet, der die überschüssige Energie im Widerstand in Wärme umsetzt. Durch den Energieverbrauch im Bremswiderstand sinkt die Zwischenkreisspannung wieder auf einen Wert ab, bei dem der Bremstransistor den Bremswiderstand vom Zwischenkreis trennt. Das Zeitintervall, in dem der Bremswiderstand dem Zwischenkreis zugeschaltet ist, fällt normalerweise nur kurz aus, beispielsweise von wenigen Millisekunden bis zu einer Sekunde, weil in dieser Zeit bereits genügend Energie im Bremswiderstand in Wärme umgesetzt wird, um die Zwischenkreisspannung auf einen akzeptablen Wert zu reduzieren. Übersteigt die Zwischenkreisspannung nach der Abschaltung des Bremswiderstands durch den generatorischen Betrieb des Drehstrommotors wieder den Schaltschwellwert, wird der Bremswiderstand wieder zugestaltet. Die Zu- und Abschaltung des Bremswiderstands erfolgt somit beim generatorischen Betrieb des Drehstrommotors in schneller ständiger Folge, da sich die Zwischenkreisspannung durch die ständige Zu- und Abschaltung des Bremswiderstands wie ein Jojo ständig auf- und abwärts bewegt. Durch die Zeitintervalle, in denen der Bremswiderstand getrennt ist vom Zwischenkreis, nämlich im motorischen Betrieb des Drehstrommotors und auch in dessen generatorischem Betrieb, kann sich der Bremswiderstand abkühlen, ohne durch Strom aus dem Zwischenkreis beheizt zu werden.

Kommt es am Bremstransistor zu einer Betriebsstörung, wie beispielsweise einem Kurzschluss, kann am Bremswiderstand durch die ständige Bestromung aus dem Zwischenkreis eine Überhitzung und/oder ein Brand auftreten. Der Bremswiderstand kann sich nicht mehr in der Zwischenzeit, in der er vom Zwischenkreis getrennt ist, abkühlen, sondern er heizt sich immer weiter auf und strahlt dadurch immer mehr Wärme in seine Umgebung ab. Diese Wärme kann Kunststoffe in benachbart angeordneten Isolierungen und Abdeckungen zum Schmelzen bringen, in der Folge können sich die erhitzten Kunststoffe auch entzünden. Hersteller von Frequenzumrichtern sichern die Ausgänge des Zwischenkreises nicht zum Bremswiderstand hin gegen Betriebsstörungen wie beispielsweise einen Kurzschluss des Bremstransistors ab, es wäre aber wünschenswert, wenn dies auf einfache Weise gelöst würde, insbesondere in Aufzugsantrieben, weil hier eine erhöhte Sicherheit gefordert ist.

Deshalb sind aus dem Stand der Technik Lösungen bekannt, wie eine erhöhte Sicherheit gegen eine Überhitzung und/oder einen Brand des Bremswiderstands erzielt werden kann. So ist es beispielsweise möglich, in den Frequenzumrichter Schmelzsicherungen zu integrieren. Die Schmelzsicherungen müssen allerdings exakt auf den maximalen Betriebsstrom und Fehlerstrom einer konkreten elektrischen Anlage abgestimmt werden. Dies ist sehr aufwendig und damit vergleichsweise teuer. Bei Auslegungsfehlern kommt es zu Betriebsstörungen.

Aus diesem Stand der Technik stellt sich deshalb die Aufgabe, eine Absicherung für den Bremstransistor und den Bremswiderstand zu schaffen, der nicht aufwendig anlagenspezifisch angepasst werden muss, um funktionsfähig zu sein, sondern auf eine einfache und kostengünstige Art in einen beliebigen Frequenzumrichter integriert werden kann.

Diese Aufgabe wird für einen gattungsgemäßen Frequenzumrichter und eine gattungsgemäße Vorrichtung gelöst, indem der Frequenzumrichter beziehungsweise die Vorrichtung zusätzlich aufweist:
- eine Messeinrichtung, die misst, ob am Bremswiderstand eine elektrische Spannung anliegt,
- eine mit der Messeinrichtung verbundene Auswerteeinrichtung zum Vergleich der von der Messeinrichtung ermittelten Messwerte mit gespeicherten Vergleichswerten,
- eine mit der Auswerteeinrichtung verbundene Schaltvorrichtung, mit der die
   Zwischenkreisspannung auf den Bremswiderstand abschaltbar ist,
wobei die Auswerteeinrichtung die Abschaltung der Zwischenkreisspannung vom Bremswiderstand auslöst, wenn die von der Messeinrichtung ermittelte Messwerte eine Einschaltdauer des Bremswiderstands anzeigen, die den in der Auswerteeinrichtung vorgegebenen Grenzwert der Einschaltdauer überschreitet.

Die Aufgabe wird für das gattungsgemäße Verfahren gelöst, indem
- mit einer Messeinrichtung gemessen wird, ob am Bremswiderstand eine elektrische Spannung anliegt,
- eine mit der Messeinrichtung verbundene Auswerteeinrichtung die von der Messeinrichtung ermittelten Messwerte mit gespeicherten Vergleichswerten vergleicht und die Abschaltung der Zwischenkreisspannung vom Bremswiderstand durch ein Signal auslöst, wenn die von der Messeinrichtung ermittelte Messwerte eine Einschaltdauer des Bremswiderstands anzeigen, die den in der Auswerteeinrichtung vorgegebenen Grenzwert der Einschaltdauer überschreiten,
- eine mit der Auswerteeinrichtung verbundene Schaltvorrichtung auf das Signal der Auswerteeinrichtung den Bremswiderstand von der Zwischenkreisspannung abschaltet.

Die Messeinrichtung weist beispielsweise einen Sensor zur Messung der am Bremswiderstand anliegenden Spannung auf. Dieser Sensor arbeitet elektronisch und generiert ein elektronisch auswertbares Sensorsignal, das an die Auswerteeinrichtung übermittelbar ist.

Die Auswerteeinrichtung weist beispielsweise eine geeignete Elektronik-Hard- und Software auf, die das Zeitintervall für die Einschaltdauer bestimmt, in dem der von der Messeinrichtung übermittelte Sensorwert eine am Bremswiderstand anliegende elektrische Spannung meldet, und dieses bestimmte Zeitintervall für die Einschaltdauer mit einem in ihr gespeicherten vorgegebenen Grenzwert vergleicht. Eine Einschaltdauer ist ein Zeitintervall, in dem die Messeinrichtung eine ununterbrochen am Bremswiderstand anliegende Spannung misst. Überschreitet das von der Auswerteeinrichtung bestimmte Zeitintervall für die Einschaltdauer den vorgegebenen und in der Auswerteeinrichtung gespeicherten Grenzwert, so schaltet die Auswerteeinrichtung den Bremswiderstand von der Zwischenkreisspannung ab. Alternativ kann die Messeinrichtung auch so ausgestaltet sein, dass diese als Sensorwert nur eine Einschaltdauer an die Auswerteeinrichtung übermittelt. Die Auswerteeinrichtung führt dann nur noch den Vergleich der übermittelten Einschaltdauer mit dem Grenzwert durch. Alternativ kann die Auswerteeinrichtung auch in die Messeinrichtung integriert sein, beispielsweise in einem Computerchip durch eine geeignete Software, so dass beide Einrichtungen in einem Bauteil integriert sind. Auch die Schaltvorrichtung kann in dieses Bauteil entsprechend integriert werden, so dass die gesamte Funktionskontrolle des Bremstransistors in ein Bauteil integriert ist.

Mit der Überwachung der Einschaltdauer des Bremswiderstands ist es nicht erforderlich, konkrete Spannungen des Bremswiderstands zu messen, es genügt, die Einschaltdauer des Bremswiderstands zu überwachen und bei einer unerklärlich langen Einschaltdauer den Bremswiderstand von der Zwischenkreisspannung abzuschalten. Die Einschaltdauer ist mit geringem Aufwand messbar, und die zeitliche Auswertung ermöglicht eine hohe Beurteilungssicherheit, ob der Bremstransistor noch ein- und ausschaltet oder ob ein Funktionsfehler vorliegt.

Da die Zeitintervalle, in denen ein Bremswiderstand im Generatorbetrieb des Drehstrommotors mit dem Zwischenkreis verbunden ist, immer nur vergleichsweise kurz sind, bis der Bremstransistor den Bremswiderstand wieder vom Zwischenkreis trennt, können schon vergleichsweise kurze Grenzwerte von 2 bis 3 Sekunden als absolute Vergleichswerte ausreichen, um zu erkennen, ob der Bremstransistor in diesem Zeitraum ordnungsgemäß geschaltet hat oder nicht. Wird eine elektrische Spannung in diesem Zeitraum am Bremswiderstand gemessen, ohne dass die Spannung in diesem Zeitraum einmal abfällt, kann mit hoher Sicherheit davon ausgegangen werden, dass der Bremstransistor nicht mehr ordnungsgemäß funktioniert. Durch die kurze Kontrollzeit wird sichergestellt, dass sich der Bremswiderstand innerhalb der Kontrollzeit nicht übermäßig aufheizen kann. Die Abschaltung erfolgt also auf diese Weise, bevor der Bremstransistor unzulässig hohe Temperaturen erreicht.

Der Begriff des "gespeicherten Vergleichswerts" ist nicht auf einen konkret gespeicherten Wert beschränkt, von diesem Begriff ist auch eine Lösung mit erfasst, in der nur geprüft wird, ob im überwachten Zeitintervall überhaupt eine einzige Schaltung stattfindet. Findet im überwachten Zeitintervall keine Schaltung statt, und müsste im überwachten Zeitintervall eine Schaltung stattgefunden haben, wenn der Bremstransistor ordnungsgemäß arbeitet, genügt anstelle eines gespeicherten Vergleichswertes eine einfache Schaltung, die bei einer Schaltung des Bremstransistors im überwachten Zeitraum den Bremswiderstand eingeschaltet lässt und bei keiner Schaltung den Bremswiderstand abschaltet. In diesem Fall ist der "gespeicherte Vergleichswert" in einer entsprechend ausgestalteten Überwachungsschaltung enthalten.

Anstelle von absoluten Zeitwerten als Grenzwert können auch relative Einschaltzeiten als Grenzwert vorgesehen sein. Wenn ein Bremswiderstand in einem Beobachtungszeitraum von beispielsweise 0,5, 1, 5 oder 10 Sekunden - je nach Anwendung - ununterbrochen unter einer elektrischen Spannung steht, ist davon auszugehen, dass der Bremstransistor nicht ordnungsgemäß schaltet.

Die vorstehenden Beispiele zeigen, dass ein geeigneter Grenzwert leicht bestimmbar ist. Der Grenzwert sollte zeitlich so kurz gewählt werden, dass sich der Bremswiderstand innerhalb dieser Zeit nicht so sehr erwärmen kann, dass eine übermäßige Erhitzung des Bremswiderstands und der umliegenden Installationen droht. Der Grenzwert sollte in zeitlicher Hinsicht so lang gewählt sein, dass in diesem Zeitraum mit sehr hoher Wahrscheinlichkeit (über 99 %) eine Abschaltung durch den Bremstransistor hätte erfolgen müssen.

Die Abschaltung kann jeweils über eine Schaltvorrichtung erfolgen, die von der Auswerteeinrichtung über ein digitales Signal betätigt werden kann.

Wenn die Messeinrichtung, die Auswerteeinrichtung und die Schaltvorrichtung eine eigenständige Vorrichtung gemäß der Lehre dieser Erfindung bilden, kann diese Vorrichtung leicht unabhängig von einem Frequenzumrichter gehandelt, zugeliefert und in einen Frequenzumrichter eingebaut und nachgerüstet werden.

Nach einer Ausgestaltung der Erfindung bilden die Messeinrichtung, die Auswerteeinrichtung und die Schaltvorrichtung ein integriertes Bauteil. Die Messeinrichtung, die Auswerteeinrichtung und die Schaltvorrichtung können eine Funktionseinheit bilden, die als integriertes Bauteil aus wenigen einzelnen Bauteilen zusammensetzbar und kostengünstig herstellbar und in einen Frequenzumrichter oder in zugehörigen Steuerungen einbaubar ist. Mit der erfindungsgemäßen Vorrichtung können unabhängig vom jeweiligen Frequenzumrichter alle Bremswiderstände mit einem einfach aufgebauten Bauteil zuverlässig gegen Kurzschlüsse im Bremstransistor durch eine einfache Überwachung der Einschaltdauer abgesichert werden, ohne dass es noch einer weiteren anlagenspezifischen Abstimmung bedürfte. Die erfindungsgemäße Sicherung könnte auch auf einfache Weise in bestehende Anlagen, insbesondere auch in ältere Anlagen, nachgerüstet werden. Die erfindungsgemäße Lösung ist anlagenunabhängig in jeden beliebigen Frequenzumrichter oder in zugehörigen Steuerungen integrierbar.

Nach einer Ausgestaltung der Erfindung erfolgt die Abschaltung zeitverzögert über ein Hochspannungsschalter.

Nach einer Ausgestaltung der Erfindung stellt die Auswerteeinrichtung im Abschaltungsfall ein Fehlersignal bereit. Das Fehlersignal kann beispielsweise von der Steuerung eines Aufzugsantriebs übernommen werden, um den Antrieb insgesamt stillzusetzen und/oder einen Fehlerhinweis in den zentralen Fehlerspeicher zu schreiben. Die Vorrichtung zur Überwachung des Bremstransistors wird auf diese Weise in eine Steuerung eines Antriebs, beispielsweise für einen Aufzug, integrierbar. Die Antriebssteuerung für den Aufzug kann das Fehlersignal nutzen, um beispielsweise die nächste Haltestation anzufahren und die im Aufzug beförderten Personen aussteigen zu lassen, bevor sie den Antrieb fehlerbedingt stillsetzt. Die Antriebssteuerung kann auch in einen Notmodus umschalten, in dem nur geringe Ströme fließen oder der im Generatorbetrieb anfallende überschüssige Strom auf eine andere Weise abgeführt wird, beispielsweise in einen Akkumulator. Das Fehlersignal kann aber auch über eine Leuchtdiode visuell erkennbar ausgegeben werden, so dass das Wartungspersonal bei einer Überprüfung des Antriebs die Fehlerursache sofort erkennen kann.

Nach einer Ausgestaltung der Erfindung ist der Frequenzumrichter in einen Maschinenantrieb wie beispielsweise einen Aufzugsantrieb, eine Baumaschine, einen Kran oder eine Fertigungsmaschine eingebaut. Die Überwachung des Bremstransistors kann in jeder Kombination eines in einen Maschinenantrieb eingebauten Frequenzumrichters mit einem Drehstrommotor eingesetzt werden, in einem Aufzugsantrieb ist dies jedoch besonders sinnvoll, da für diesen Einsatzzweck besondere Sicherheitsanforderungen zu beachten sind.

Die Erfindung soll nun anhand eines Ausführungsbeispiels näher erläutert werden.

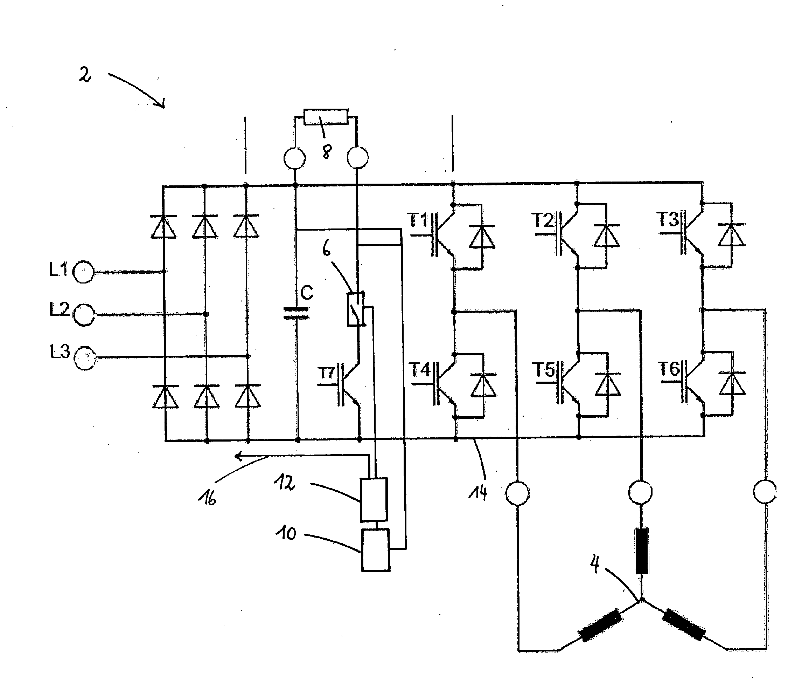

In der beigefügten Zeichnung ist der Frequenzumrichter 2 dargestellt. Der Drehstrom wird aus einem zeichnerisch nicht näher dargestellten Gleichrichter mit einer Dreiphasenbrückengleichrichterschaltung in den Wechselrichter eingespeist. Als leistungselektronische Schalter sind im Ausführungsbeispiel die gesteuerten Brücken T1 bis T6 gezeigt, die als Insulated Gate Bipolar Transistor (IGBT) ausgeführt sein können. Aus dem Wechselrichter gelangt der Strom in den Drehstrommotor 4. Je nach Betriebszustand des Motors wirkt dieser als Motor oder als Generator. Im Fall des Generatorbetriebs speist der Drehstrommotor 4 Strom in den Zwischenkreis 14 zurück. Dort steigt aufgrund des eingespeisten Stromes die Zwischenkreisspannung an.

Wird ein Auslöseschwellwert überschritten, schaltet der Bremstransistor T7 den Bremswiderstand 8 ein. Im Bremswiderstand 8 wird der Strom in Wärme umgesetzt, wodurch sich der Wert für die Zwischenkreisspannung wieder verringert. Sinkt der Zwischenkreisspannungswert unter einen vorgegebenen Level ab, schaltet der Bremstransistor T7 den Bremswiderstand 8 wieder ab.

Die am Bremswiderstand 8 anliegende Spannung wird im Ausführungsbeispiel von einer Messeinrichtung 10 gemessen. Der von der Messeinrichtung 10 gemessene Messwert wird an die Auswerteeinrichtung 12 übermittelt. Je nachdem, ob die Auswerteeinrichtung 12 durch den Vergleich des Messwertes mit einem gespeicherten Vergleichswert davon ausgeht, ob der Bremstransistor T7 fehlerhaft ist oder nicht, übermittelt die Auswerteeinrichtung 12 einen Stellbefehl an die Schaltvorrichtung 6, die Verbindung des Bremswiderstands 8 mit dem Zwischenkreis 14 zu trennen. In der beigefügten Zeichnung ist die Verbindung getrennt gezeigt, im Normalbetrieb ist die Verbindung hergestellt, damit der Bremswiderstand jederzeit bestromt werden kann, wenn das für Bremszwecke erforderlich ist.

Die Auswerteeinheit 12 verfügt außerdem über einen Ausgang 16, über den ein Fehlersignal ausgegeben werden kann, wenn die Auswerteeinheit 12 einen Fehler des Bremstransistors T7 festgestellt hat.

Die Erfindung ist nicht auf das vorstehende Ausführungsbeispiel beschränkt. Der Fachmann kann das Ausführungsbeispiel auf eine ihm als geeignet erscheinende Weise abwandeln, ohne dabei den Kern der Lehre der vorliegenden Erfindung zu verlassen.

## Patentansprüche

1. Frequenzumrichter (2) mit
- einem einen Zwischenkreis (14) speisenden Gleichrichter,
- einem aus dem Zwischenkreis (14) gespeisten Wechselrichter mit leistungselektronischen Schaltern (T1 - T6),
- einem vom Frequenzumrichter (2) betriebenen Drehstrommotor (4), und
- einem Bremstransistor (T7) mit einem damit verbundenen Bremswiderstand (8),
**dadurch gekennzeichnet, dass** der Frequenzumrichter (2) zusätzlich aufweist:
- eine Messeinrichtung (10), die misst, ob am Bremswiderstand (8) eine elektrische Spannung anliegt,
- eine mit der Messeinrichtung (10) verbundene Auswerteeinrichtung (12) zum Vergleich der von der Messeinrichtung (10) ermittelten Messwerte mit gespeicherten Vergleichswerten,
- eine mit der Auswerteeinrichtung (12) verbundene Schaltvorrichtung (6), mit der die Zwischenkreisspannung auf den Bremswiderstand (8) abschaltbar ist,
wobei die Auswerteeinrichtung (12) die Abschaltung der Zwischenkreisspannung vom Bremswiderstand (8) auslöst, wenn die von der Messeinrichtung (10) ermittelte Messwerte eine Einschaltdauer des Bremswiderstands (8) anzeigen, die den in der Auswerteeinrichtung (12) vorgegebenen Grenzwert der Einschaltdauer überschreitet.

2. Vorrichtung zur Funktionsüberwachung eines Bremswiderstands, **dadurch gekennzeichnet, dass** die Vorrichtung aufweist:
- eine Messeinrichtung (10), die misst, ob am Bremswiderstand (8) eine elektrische Spannung anliegt,
- eine mit der Messeinrichtung (10) verbundene Auswerteeinrichtung (12) zum Vergleich der von der Messeinrichtung (10) ermittelten Messwerte mit gespeicherten Vergleichswerten,
- eine mit der Auswerteeinrichtung (12) verbundene Schaltvorrichtung (6), mit
der die Zwischenkreisspannung auf den Bremswiderstand (8) abschaltbar ist,
wobei die Auswerteeinrichtung (12) die Abschaltung der Zwischenkreisspannung vom Bremswiderstand (8) auslöst, wenn die von der Messeinrichtung (10) ermittelte Messwerte eine Einschaltdauer des Bremswiderstands (8) anzeigen, die den in der Auswerteeinrichtung (12) vorgegebenen Grenzwert der Einschaltdauer überschreitet.

3. Frequenzumrichter (2) nach Anspruch 1 oder Vorrichtung nach Anspruch 2, **dadurch gekennzeichnet, dass** die Messeinrichtung (10), die Auswerteeinrichtung (12) und die Schaltvorrichtung (6) ein integriertes Bauteil bilden.

4. Frequenzumrichter (2) nach Anspruch 1 oder 3 oder Vorrichtung nach Anspruch 2 oder 3, **dadurch gekennzeichnet, dass** die Abschaltung zeitverzögert über ein Hochspannungsschalter erfolgt.

5. Frequenzumrichter (2) nach einem der vorhergehenden Ansprüche 1, 3 oder 4 oder Vorrichtung nach einem der Ansprüche 2, 3 oder 4, **dadurch gekennzeichnet, dass** die Auswerteeinrichtung (12) im Abschaltungsfall ein Fehlersignal bereitstellt.

6. Frequenzumrichter (2) nach einem der vorhergehenden Ansprüche 1, 3 , 4 oder 5 oder Vorrichtung nach einem der Ansprüche 2, 3, 4 oder 5, **dadurch gekennzeichnet, dass** der Frequenzumrichter (2) in einen Maschinenantrieb eingebaut ist.

7. Verfahren zur Funktionsüberwachung eines Bremswiderstandes (8) in einem Frequenzumrichterbetrieb (2) mit
- einem einen Zwischenkreis (14) speisenden Gleichrichter,
- einem aus dem Zwischenkreis (14) gespeisten Wechselrichter mit leistungselektronischen Schaltern,
- einem vom Frequenzumrichter (2) betriebenen Drehstrommotor, und
- einem Bremstransistor (T7) mit einem damit verbundenen Bremswiderstand (8),
**dadurch gekennzeichnet, dass**
- mit einer Messeinrichtung (10) gemessen wird, ob am Bremswiderstand (8) eine elektrische Spannung anliegt,
- eine mit der Messeinrichtung (10) verbundene Auswerteeinrichtung (12) die von der Messeinrichtung (10) ermittelten Messwerte mit gespeicherten Vergleichswerten vergleicht und die Abschaltung der Zwischenkreisspannung vom Bremswiderstand (8) durch ein Signal auslöst, wenn die von der Messeinrichtung (10) ermittelte Messwerte eine Einschaltdauer des Bremswiderstands (8) anzeigen, die den in der Auswerteeinrichtung (12) vorgegebenen Grenzwert der Einschaltdauer überschreiten,
- eine mit der Auswerteeinrichtung (12) verbundene Schaltvorrichtung (6) auf das Signal der Auswerteeinrichtung (12) den Bremswiderstand (8) von der Zwischenkreisspannung abschaltet.
